(19) Europäisches Patentamt / European Patent Office / Office européen des brevets

(11) **EP 4 572 426 A1**

(12) **EUROPEAN PATENT APPLICATION**
published in accordance with Art. 153(4) EPC

(43) Date of publication:
**18.06.2025 Bulletin 2025/25**

(21) Application number: **23870051.2**

(22) Date of filing: **21.08.2023**

(51) International Patent Classification (IPC):
*H04W 52/02* (2009.01)

(52) Cooperative Patent Classification (CPC):
**H04W 52/02; H04W 76/28;** Y02D 30/70

(86) International application number:
**PCT/CN2023/114092**

(87) International publication number:
**WO 2024/066806 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 CN 202211201791**

(71) Applicant: **Honor Device Co., Ltd.**
**Shenzhen, Guangdong 518040 (CN)**

(72) Inventor: **ZHANG, Jian**
**Shenzhen, Guangdong 518040 (CN)**

(74) Representative: **MERH-IP Matias Erny Reichl Hoffmann**
**Patentanwälte PartG mbB**
**Paul-Heyse-Straße 29**
**80336 München (DE)**

(54) **ADJUSTMENT METHOD AND ADJUSTMENT APPARATUS FOR CONNECTED DISCONTINUOUS RECEPTION**

(57) This application relates to the communication field, and provides an adjustment method and an adjustment apparatus for connected discontinuous reception. The adjustment method includes: receiving indication information sent by a network device, where the indication information is used for determining a start moment of an on duration timer in connected discontinuous reception CDRX; and adjusting the start moment of the on duration timer based on the indication information. According to this solution of this application, user equipment may adjust the start moment of the on duration timer in the CDRX based on the indication information, so that the start moment of the on duration timer in the CDRX matches a cycle of a service data frame. This ensures that the user equipment can transmit the service data frame within the on duration timer in the CDRX, to achieve energy saving for the user equipment.

FIG. 4

## Description

This application claims priority to Chinese Patent Application No. 202211201791.5, filed with the China National Intellectual Property Administration on September 29, 2022 and entitled "ADJUSTMENT METHOD AND ADJUSTMENT APPARATUS FOR CONNECTED DISCONTINUOUS RECEPTION", which is incorporated herein by reference in its entirety.

## TECHNICAL FIELD

This application relates to the communication field, and specifically, to an adjustment method and an adjustment apparatus for connected discontinuous reception.

## BACKGROUND

Extended reality (extended reality, XR) provides a new human-computer interaction mode. However, an XR service is characterized by a large data volume and a high delay requirement. Therefore, this also causes a new challenge to development of a wireless network. Connected discontinuous reception (connected discontinuous reception, CDRX) is a widely applied power-saving mechanism. However, when the CDRX technology is directly applied to the XR service, according to a current CDRX cycle configuration method, after a system frame returns to zero, a problem that a start moment of a duration timer in the CDRX does not match an XR service data frame occurs. This may be understood as follows: After the system frame returns to zero, the start moment of the on duration timer in the CDRX is out of synchronization with a moment at which the XR service data frame is transmitted, undermining power saving effect.

Therefore, how to adjust a start moment of an on duration timer in connected discontinuous reception to ensure power saving effect for user equipment is a problem that urgently needs to be resolved.

## SUMMARY

This application provides an adjustment method and an adjustment apparatus for connected discontinuous reception, to ensure energy saving for user equipment.

According to a first aspect, an adjustment method for connected discontinuous reception is provided, and includes:

receiving indication information sent by a network device, where the indication information is used for determining a start moment of an on duration timer in connected discontinuous reception CDRX; and

adjusting the start moment of the on duration timer based on the indication information.

In this technical solution of this application, user equipment may receive the indication information sent by the network device, where the indication information is used for determining the start moment of the on duration timer in the CDRX; and adjust the start moment of the on duration timer based on the indication information. According to this solution of this application, the user equipment may adjust the start moment of the on duration timer in the CDRX based on the indication information, so that the start moment of the on duration timer in the CDRX matches a cycle of a service data frame. This ensures that the user equipment can transmit the service data frame within the on duration timer in the CDRX, to achieve energy saving for the user equipment.

With reference to the first aspect, in some implementations of the first aspect, the indication information includes a first configuration parameter and a second configuration parameter, the first configuration parameter is used for indicating a first subframe offset, and the second configuration parameter is used for indicating a cycle of the first subframe offset; and the adjusting the start moment of the on duration timer based on the indication information includes: determining a second subframe offset based on the first configuration parameter and the second configuration parameter, where the second subframe offset is used for determining the start moment of the on duration timer.

With reference to the first aspect, in some implementations of the first aspect, the determining a second subframe offset based on the first configuration parameter and the second configuration parameter includes: determining the second subframe offset based on the first configuration parameter and the second configuration parameter when a system frame returns to zero.

In this technical solution of this application, after the system frame returns to zero, a problem that the start moment of the on duration timer in the CDRX does not match a cycle of a service frame may occur. Therefore, when the system frame returns to zero, the user equipment may determine the second subframe offset based on the first configuration parameter and the second configuration parameter, and adjust a CDRX cycle based on the second subframe offset, so that the start moment of the on duration timer in the CDRX matches the cycle of the service data frame. This ensures that the user equipment can transmit the service data frame within the on duration timer in the CDRX, to achieve energy saving for the user equipment.

With reference to the first aspect, in some implementations of the first aspect, the start moment of the on duration timer meets the following first formula:

$$[[(SFN \times 10) + \text{subframe number}] \text{ modulo (drx-cycle)}] = [(\text{drx- StartOffset}) \text{modulo} (\text{drx-cycle})]$$

, where
drx-StartOffset = drx-StartOffset + drx-StartOffset2 * x; initial x = 0, and when a system frame number returns to zero, x = x modulo X + 1; drx-StartOffset is used for indicating a subframe in which a CDRX cycle starts; drx-StartOffset2 is used for indicating the first subframe offset; X is used for indicating the cycle of the first subframe offset; drx-StartOffset2 * x is used for indicating the second subframe offset; SFN is used for indicating the system frame number; subframe number is used for indicating a subframe number; and drx-cycle is used for indicating the CDRX cycle.

In this embodiment of this application, the start moment of the on duration timer in the CDRX may be adjusted based on the first configuration parameter and the second configuration parameter, so that the start moment of the on duration timer in the CDRX matches the cycle of the service data frame (for example, an XR service data frame). This ensures that the user equipment can transmit service data within the on duration timer in the CDRX, to achieve energy saving for the user equipment. In this embodiment of this application, because the start moment of the on duration timer in the CDRX can be adjusted based on the first configuration parameter and the second configuration parameter, an existing CDRX cycle calculation method may not be modified, so that compatibility with the user equipment is good.

With reference to the first aspect, in some implementations of the first aspect, the start moment of the on duration timer is a moment obtained based on a first count value.

With reference to the first aspect, in some implementations of the first aspect, the indication information includes a third configuration parameter, and the third configuration parameter is used for indicating a cycle of the first count value.

With reference to the first aspect, in some implementations of the first aspect, the start moment of the on duration timer meets the following second formula:

$$\lfloor \text{cdrx-count modulo (drx-cycle)} \rfloor = \lfloor (\text{drx-StartOffset}) \text{modulo} (\text{drx-cycle}) \rfloor,$$

where
initial cdrx-count = 0, and when a system frame number changes, cdrx-count = (cdrx-count + 1) modulo Y; cdrx-count is used for indicating the first count value; Y is used for indicating the cycle of the first count value; drx-StartOffset is used for indicating a subframe in which a CDRX cycle starts; SFN is used for indicating the system frame number; subframe number is used for indicating a subframe number; and drx-cycle is used for indicating the CDRX cycle.

In this embodiment of this application, the start moment of the on duration timer in the CRDX may be counted based on the first count value, so that the start moment of the on duration timer in the CDRX matches cycles of different services (for example, an XR service). This ensures that the user equipment can transmit service data within the on duration timer in the CDRX, to achieve energy saving for the user equipment. According to this solution of this application, no other processing needs to be performed after one time of configuration, and the start moment of the on duration timer in the CDRX can be adjusted with small signaling overheads.

With reference to the first aspect, in some implementations of the first aspect, the indication information is carried in radio resource control information RRC, and/or the indication information is carried in media access control information MAC CE, and/or the indication information is carried in first downlink control information DCI.

With reference to the first aspect, in some implementations of the first aspect, the indication information includes second DCI, and at least one bit in the second DCI is used for indicating a first time offset between a moment at which the second DCI is received and the start moment of the on duration timer.

In this embodiment of this application, the start moment of the on duration timer in the CDRX may be adjusted based on the indication information, so that the start moment of the on duration timer in the CDRX matches cycles of different services. This ensures that the user equipment can transmit service data within the on duration timer in the CDRX, to achieve energy saving for the user equipment.

With reference to the first aspect, in some implementations of the first aspect, the second DCI is user equipment UE group common DCI.

With reference to the first aspect, in some implementations of the first aspect, the indication information includes third DCI, at least one bit in the third DCI is used for indicating a second time offset, and the second time offset is used for adjusting the start moment of the on duration timer.

In this embodiment of this application, the start moment of the on duration timer in the CDRX may be adjusted based on the indication information, so that the start moment of the on duration timer in the CDRX matches cycles of different services. This ensures that the user equipment can transmit service data within the on duration timer in the CDRX, to achieve energy saving for the user equipment.

With reference to the first aspect, in some implementations of the first aspect, the third DCI is UE group common DCI.

According to a second aspect, an adjustment method for connected discontinuous reception is provided, and includes:

sending indication information to user equipment UE, where the indication information is used for determining a start moment of an on duration timer in connected discontinuous reception CDRX; and

adjusting the start moment of the on duration timer based on the indication information.

It should be understood that, for benefits of the technical solution in the second aspect, reference may be made to related descriptions in the first aspect. Details are not described herein again.

With reference to the second aspect, in some implementations of the second aspect, the indication information includes a first configuration parameter and a second configuration parameter, the first configuration parameter is used for indicating a first subframe offset, and the second configuration parameter is used for indicating a cycle of the first subframe offset; and the adjusting the start moment of the on duration timer based on the indication information includes: determining a second subframe offset based on the first configuration parameter and the second configuration parameter, where the second subframe offset is used for determining the start moment of the on duration timer.

With reference to the second aspect, in some implementations of the second aspect, the determining a second subframe offset based on the first configuration parameter and the second configuration parameter includes: determining the second subframe offset based on the first configuration parameter and the second configuration parameter when a system frame returns to zero.

With reference to the second aspect, in some implementations of the second aspect, the start moment of the on duration timer meets the following first formula:

$$[[(SFN \times 10) + subframe\ number]\ modulo\ (drx\text{-}cycle)] = [(drx\text{-}StartOffset)modulo(drx\text{-}cycle)]$$

, where
drx-StartOffset = drx-StartOffset + drx-StartOffset2 * x; initial x = 0, and when a system frame number returns to zero, x = x modulo X + 1; drx-StartOffset is used for indicating a subframe in which a CDRX cycle starts; drx-StartOffset2 is used for indicating the first subframe offset; X is used for indicating the cycle of the first subframe offset; drx-StartOffset2 * x is used for indicating the second subframe offset; SFN is used for indicating the system frame number; subframe number is used for indicating a subframe number; and drx-cycle is used for indicating the CDRX cycle.

With reference to the second aspect, in some implementations of the second aspect, the start moment of the on duration timer is a moment obtained based on a first count value.

With reference to the second aspect, in some implementations of the second aspect, the indication information includes a third configuration parameter, and the third configuration parameter is used for indicating a cycle of the first count value.

With reference to the second aspect, in some implementations of the second aspect, the start moment of the on duration timer meets the following second formula:

$$\lfloor cdrx\text{-}count\ modulo\ (drx\text{-}cycle)\rfloor = \lfloor(drx\text{-}StartOffset)modulo(drx\text{-}cycle)\rfloor,$$

where
initial cdrx-count = 0, and when a system frame number changes, cdrx-count = (cdrx-count + 1) modulo Y; cdrx-count is used for indicating the first count value; Y is used for indicating the cycle of the first count value; drx-StartOffset is used for indicating a subframe in which a CDRX cycle starts; SFN is used for indicating the system frame number; subframe number is used for indicating a subframe number; and drx-cycle is used for indicating the CDRX cycle.

With reference to the second aspect, in some implementations of the second aspect, the indication information is carried in radio resource control information RRC, and/or the indication information is carried in media access control information MAC CE, and/or the indication information is carried in first downlink control information DCI.

With reference to the second aspect, in some implementations of the second aspect, the indication information includes second DCI, and at least one bit in the second DCI is used for indicating a first time offset between a moment at which the second DCI is sent and the start moment of the on duration timer.

With reference to the second aspect, in some implementations of the second aspect, the second DCI is UE group common DCI.

With reference to the second aspect, in some implementations of the second aspect, the indication information includes third DCI, at least one bit in the third DCI is used for indicating a second time offset, and the second time offset is used for adjusting the start moment of the on duration timer.

With reference to the second aspect, in some implementations of the second aspect, the third DCI is UE group common DCI.

According to a third aspect, a transmission method for a service data frame is provided, and is applied to an application function entity. The method includes:

receiving second indication information, where the second indication information is used for determining a time interval between two adjacent service data frames; and

adjusting the service data frame based on the indication information.

With reference to the third aspect, in some implementations of the third aspect, the second indication information includes a first parameter, and the first parameter is used for indicating a current system frame number and a subframe number.

With reference to the third aspect, in some implementations of the third aspect, the adjusting the service data frame based on the indication information includes:

adjusting the service data frame based on the first parameter when a system frame returns to zero. With reference to the third aspect, in some implementations of the third aspect, the receiving second indication information includes:

receiving the first parameter sent by a network device.

With reference to the third aspect, in some implementations of the third aspect, the second indication information includes a second parameter, the second parameter is used for indicating a third time offset, and the third time offset is used for determining a moment at which the service data frame is transmitted.

With reference to the third aspect, in some implementations of the third aspect, the adjusting the service data frame based on the indication information includes:

adjusting the service data frame based on the second parameter when a system frame returns to zero.

With reference to the third aspect, in some implementations of the third aspect, the receiving second indication information includes:

receiving the second parameter sent by user equipment.

With reference to the third aspect, in some implementations of the third aspect, the service data frame includes an extended reality XR service data frame.

According to a fourth aspect, a transmission method for a service data frame is provided, and is applied to a network device. The method includes:

sending second indication information to an application function entity, where the second indication information is used for determining a time interval between two adjacent service data frames.

With reference to the fourth aspect, in some implementations of the fourth aspect, the second indication information includes a first parameter, and the first parameter is used for indicating a current system frame number and a subframe number.

With reference to the fourth aspect, in some implementations of the fourth aspect, the service data frame includes an extended reality XR service data frame.

According to a fifth aspect, a transmission method for a service data frame is provided, and is applied to user equipment. The method includes:

sending second indication information to an application function entity, where the second indication information is used for determining a time interval between two adjacent service data frames.

With reference to the fifth aspect, in some implementations of the fifth aspect, the second indication information includes a second parameter, the second parameter is used for indicating a third time offset, and the third time offset is used for determining a moment at which the service data frame is transmitted.

With reference to the fifth aspect, in some implementations of the fifth aspect, the sending second indication information to an application function entity includes:

sending the second indication information to the application function entity before a system frame returns to zero.

With reference to the fifth aspect, in some implementations of the fifth aspect, the service data frame includes an extended reality XR service data frame.

According to a sixth aspect, an adjustment apparatus for connected discontinuous reception CDRX is provided. The adjustment apparatus includes a unit that includes software and/or hardware and that is configured to perform any one of the methods in the first aspect, the second aspect, the third aspect, the fourth aspect, or the fifth aspect.

According to a seventh aspect, an electronic device is provided, and includes a memory, a processor, and a computer program stored in the memory and capable of running on the processor. When the processor executes the computer program, any one of the adjustment methods in the first aspect, the second aspect, the third aspect, the fourth aspect, or the fifth aspect can be implemented.

Optionally, when the electronic device is configured to implement any one of the methods in the first aspect, the electronic device may be user equipment; or when the electronic device is configured to implement any one of the methods in the second aspect, the electronic device may be a network device.

According to an eighth aspect, a chip is provided, and includes a processor. The processor is configured to read and execute a computer program stored in a memory. When the computer program is executed by the processor, any one of the adjustment methods in the first aspect, the second aspect, the third aspect, the fourth aspect, or the fifth aspect can be implemented.

Optionally, the chip further includes a memory, and the memory is electrically connected to the processor.

Optionally, the chip may further include a communication interface.

According to a ninth aspect, a computer-readable storage medium is provided. The computer-readable storage medium stores a computer program. When the computer program is executed by a processor, any one of the adjustment methods in the first aspect, the second aspect, the third aspect, the fourth aspect, or the fifth aspect can be implemented.

According to a tenth aspect, a computer program product is provided. The computer program product includes a computer program. When the computer program is executed by a processor, any one of the adjustment methods in the first aspect, the second aspect, the third aspect, the fourth aspect, or the fifth aspect can be implemented.

BRIEF DESCRIPTION OF DRAWINGS

FIG. 1 is a schematic diagram of a cycle of connected discontinuous reception;

FIG. 2 is a schematic diagram of an application scenario to which an embodiment of this application is applicable;

FIG. 3 is a schematic diagram showing that an on duration timer in CDRX does not match a cycle of an XR service after a system frame number returns to zero;

FIG. 4 is a schematic diagram of an adjustment method for connected discontinuous reception according to an embodiment of this application;

FIG. 5 is a schematic diagram of another adjustment method for connected discontinuous reception according to an embodiment of this application;

FIG. 6 is a schematic diagram of still another adjustment method for connected discontinuous reception according to an embodiment of this application;

FIG. 7 is a schematic diagram of still another adjustment method for connected discontinuous reception according to an embodiment of this application;

FIG. 8 is a schematic diagram of still another adjustment method for connected discontinuous reception according to an embodiment of this application;

FIG. 9 is a schematic diagram of still another adjustment method for connected discontinuous reception according to an embodiment of this application;

FIG. 10 is a schematic diagram of still another adjustment method for connected discontinuous reception according to an embodiment of this application;

FIG. 11 is a schematic diagram of still another adjustment method for connected discontinuous reception according to an embodiment of this application;

FIG. 12 is a schematic diagram of a structure of an adjustment apparatus for connected discontinuous reception according to an embodiment of this application;

FIG. 13 is a schematic diagram of a structure of an adjustment apparatus for connected discontinuous reception according to an embodiment of this application; and

FIG. 14 is a schematic diagram of a structure of an adjustment apparatus for connected discontinuous reception according to an embodiment of this application.

**DESCRIPTION OF EMBODIMENTS**

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more of the features. In the description of embodiments, unless otherwise specified, "a plurality of" means two or more.

For ease of understanding of embodiments of this application, first, a brief description of the related concepts involved in embodiments of this application is provided.

1. Extended reality (extend reality, XR) service

The XR service is to combine reality and virtuality by using a computer, to build a virtual environment for human-computer interaction. The XR service may include a virtual reality (Virtual Reality, VR) service, an augmented reality (Augmented Reality, AR) service, a mixed reality (Mixed Reality, MR) service, and the like.

Characteristics of the XR service include: 1. periodicity; 2. a large data volume; and 3. a high requirement for a low delay.

2. Connected discontinuous reception (connected discontinuous reception, CDRX)

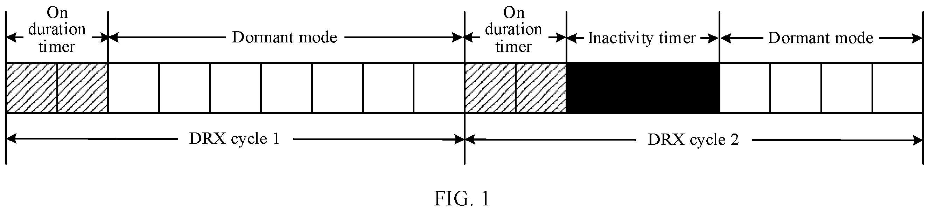

If UE performs no data transmission in a connected mode, monitoring on a physical downlink control channel (Physical Downlink Control Channel, PDCCH) may be stopped according to a DRX rule, to save power. ADRX cycle may include two time periods: an on duration timer (On Duration Timer) and a dormant mode (Opportunity for DRX). For example, refer to a CDRX cycle 1 shown in FIG. 1.

Optionally, a CDRX cycle may further include an inactivity timer (DRX-Inactivity Timer). For example, refer to a CDRX cycle 2 shown in FIG. 1. If the inactivity timer is operating, the UE may monitor a downlink PDCCH subframe until the inactivity timer expires. After the inactivity timer mechanism is added, a data processing delay can be significantly reduced.

Currently, a start moment of an on duration timer in a CDRX cycle meets the following formula:

[[(SFN $\times$ 10) + subframe number] modulo (drx-cycle)] = [(drx- StartOffset)modulo(drx-cycle)], where

SFN is used for indicating a system frame number; subframe number is used for indicating a subframe number; drx-cycle is used for indicating a CDRX cycle; and drx-StartOffset is used for indicating a subframe in which the CDRX cycle starts.

3. Physical downlink control channel (Physical Downlink Control Channel, PDCCH)

The PDCCH carries scheduling information and other control information, for example, including a transmission format, resource allocation, an uplink scheduling grant, power control, uplink retransmission information, and the like.

4. Wake-up signal (Wake Up Signal, WUS) technology

When the wake-up signal technology is used, a network device may periodically send DCI 2_6 to user equipment before each DRX cycle. The DCI 2_6 indicates whether to-be-received data and/or to-be-sent data exist/exists in an upcoming DRX cycle.

For example, the UE may receive downlink control information DCI 2_6 before an on duration timer. The downlink control information DCI 2_6 may include 1+N bits. The first bit is a WUS, and may indicate whether the UE is to start a corresponding on duration timer (in other words, whether to monitor a PDCCH). The subsequent N bits (for example, N may be set to 0 to 5) are used for indicating secondary cell dormancy (Scell dormancy).

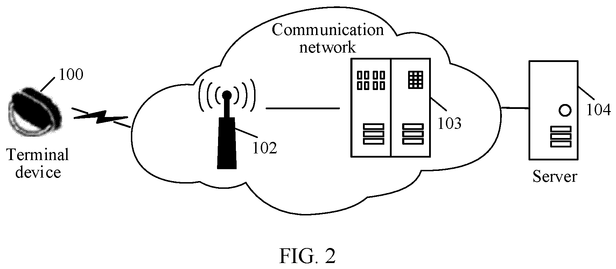

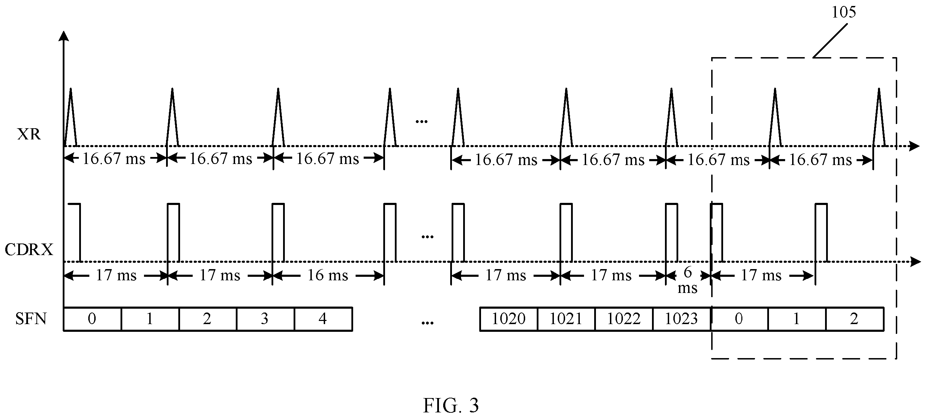

Application scenarios of embodiments of this application are described below by using examples with reference to FIG. 2 and FIG. 3.

For example, FIG. 2 is a schematic diagram of transmission of an XR service data frame. FIG. 2 includes user equipment 100, a network device 102 (for example, a base station), a core network device 103, and a server 104. The user equipment 100 is a wearable device (for example, VR glasses) for a user, and the user equipment 100 may support an XR service.

For example, an example in which the user equipment 100 receives video data sent by the server 104 is used for description. For example, when a user carrying the user equipment 100 turns the head or performs another movement action, the user equipment 100 detects an operation of the user and generates control information. Then the user equipment 100 may send the control information to the server 104, to request to obtain a video frame related to the operation. After receiving the request, the server 104 may send, to the user equipment 100, a video frame related to the operation.

It can be understood that the video frame and the control information may be transmitted between the user equipment 100 and the server 104 through a wireless communication network (for example, a 5G network). The communication network includes the network device 102 and the core network device 103. Therefore, data (for example, the video frame) and the control information may be transmitted between the user equipment 100 and the server 104 through the network device 102.

The XR service is characterized by a periodicity, a large data volume, and a high delay requirement. Therefore, to achieve energy saving for the user equipment, a CDRX technology is directly applied to the XR service. To be specific, an XR service data frame may be transmitted within an on duration timer in CDRX. If the XR service data frame needs to be transmitted within the on duration timer in the CDRX, a start moment of the on duration timer in the CDRX needs to match a cycle of the XR service data frame.

Currently, matching between a plurality of CDRX cycles and cycles of XR service data frames may be implemented through configuration. However, when the CDRX technology is directly applied to the XR service, according to a current CDRX cycle configuration method, after a system frame returns to zero, a problem that the start moment of the on duration timer in the CDRX does not match the XR service data frame occurs. This may be understood as follows: After the system frame returns to zero, the start moment of the on duration timer in the CDRX is out of synchronization with a moment at which the XR service data frame is transmitted, undermining power saving effect.

For example, as shown in FIG. 3, it is assumed that a cycle of the XR service is 16.67 ms. According to an existing solution, a CDRX cycle may be set to a non-integer value. For example, the CDRX cycle may be set to (50/3) ms, and a formula for CDRX is modified as follows

$$[[(SFN \times 10) + \text{subframe number}] \text{ modulo (drx-cycle)}] = [(\text{drx- StartOffset}) \text{modulo(drx-cycle)}]$$

Based on the CDRX cycle of (50/3) ms and the modified formula, the CDRX cycle may be set to 17 ms, 17 ms, and 16 ms, so that the CDRX cycle matches the cycle of the XR service. However, based on the modified formula, the CDRX cycle may be started after the system frame returns to zero, leading to a problem that the CDRX cycle does not match the cycle of the XR service after the system frame returns to zero, as indicated by 105 in FIG. 3.

It should be understood that the XR service data frame is used above as an example for description. The service data frame may alternatively be a data frame of another service, or may be another data frame that can be sent and received in the CDRX mechanism. This is not limited in this application.

In view of this, embodiments of this application provide an adjustment method and an adjustment apparatus for connected discontinuous reception. In the adjustment method in embodiments of this application, user equipment may receive indication information sent by a network device, where the indication information is used for determining a start moment of an on duration timer in CDRX; and adjust the start moment of the on duration timer based on the indication information. According to this solution of this application, the user equipment may adjust the start moment of the on duration timer in the CDRX based on the indication information, so that the start moment of the on duration timer in the CDRX matches a cycle of a service data frame. This ensures that the user equipment can transmit the service data frame within the on duration timer in the CDRX, to achieve energy saving for the user equipment.

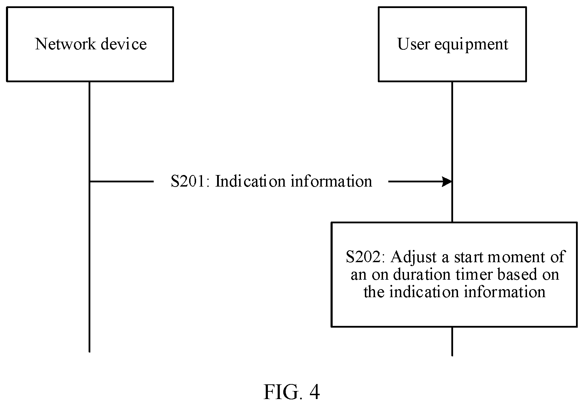

The following describes in detail the adjustment method for connected discontinuous reception in embodiments of this application with reference to FIG. 4 to FIG. 12.

FIG. 4 is a schematic flowchart of an adjustment method for connected discontinuous reception according to an embodiment of this application.

Step S201: A network device sends indication information to user equipment.

The indication information is used for indicating and determining a start moment of an on duration timer in CDRX.

For example, the user equipment may receive the indication information sent by the network device.

Step S202: Adjust the start moment of the on duration timer based on the indication information.

It should be understood that, in this embodiment of this application, both the network device and the user equipment may adjust the start moment of the on duration timer based on the indication information, so that the start moment of the on duration timer in the CDRX matches a cycle of a service data frame.

In this embodiment of this application, the start moment of the on duration timer in the CDRX may be adjusted based on the indication information, so that the start moment of the on duration timer in the CDRX matches the cycle of the service data frame. This ensures that the user equipment can transmit the service data frame within the on duration timer in the CDRX, to achieve energy saving for the user equipment.

Optionally, in an implementation, the indication information includes a first configuration parameter and a second configuration parameter, the first configuration parameter is used for indicating a first subframe offset, and the second configuration parameter is used for indicating a cycle of the first subframe offset; and the adjusting the start moment of the on duration timer based on the indication information includes:
determining a second subframe offset based on the first configuration parameter and the second configuration parameter, where the second subframe offset is used for determining the start moment of the on duration timer.

For example, the indication information is carried in radio resource control information RRC, and/or the indication information is carried in media access control information MAC CE, and/or the indication information is carried in first downlink control information DCI.

Optionally, the determining a second subframe offset based on the first configuration parameter and the second configuration parameter includes:

determining the second subframe offset based on the first configuration parameter and the second configuration parameter when a system frame returns to zero.

For example, in this embodiment of this application, after a system frame number returns to zero, the second subframe offset may be determined based on the first configuration parameter and the second configuration parameter. The start moment of the on duration timer may be determined by applying the second subframe offset to a first formula.

Optionally, the start moment of the on duration timer meets the following first formula:

$$[[(SFN \times 10) + \text{subframe number}] \text{ modulo (drx-cycle)}] = [(\text{drx-StartOffset}) \text{modulo(drx-cycle)}]$$

, where
drx-StartOffset = drx-StartOffset + drx-StartOffset2 * x; initial x = 0, and when a system frame number returns to zero, x = x modulo X + 1; drx-StartOffset is used for indicating a subframe in which a CDRX cycle starts; drx-StartOffset2 is used for indicating the first subframe offset; X is used for indicating the cycle of the first subframe offset; drx-StartOffset2 * x is used for indicating the second subframe offset; SFN is used for indicating the system frame number; subframe number is used for indicating a subframe number; and drx-cycle is used for indicating the CDRX cycle.

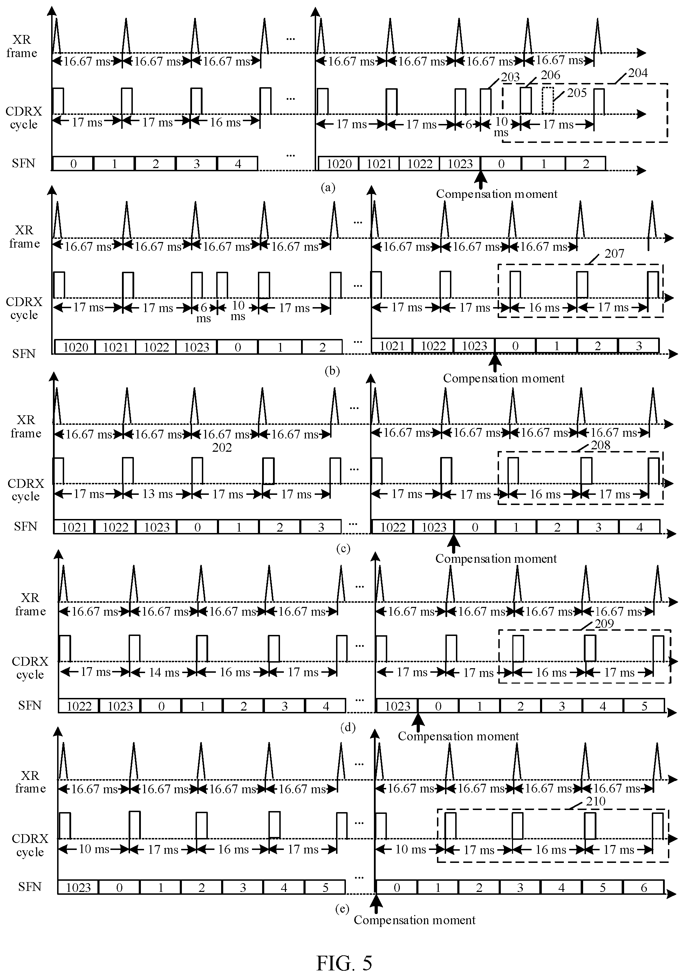

For example, for an implementation process, refer to related descriptions in a subsequent implementation 1. For example, refer to related descriptions of FIG. 5. Details are not described herein again.

In this embodiment of this application, the start moment of the on duration timer in the CDRX may be adjusted based on the first configuration parameter and the second configuration parameter, so that the start moment of the on duration timer in the CDRX matches the cycle for transmitting the service data frame (for example, an XR service). This ensures that the user equipment can transmit service data within the on duration timer in the CDRX, to achieve energy saving for the user equipment. In this embodiment of this application, because the start moment of the on duration timer in the CDRX can be adjusted based on the first configuration parameter and the second configuration parameter, an existing CDRX cycle calculation formula may not be modified, so that compatibility with the user equipment is good.

Optionally, in an implementation, the start moment of the on duration timer is a moment obtained based on a first count value.

Optionally, the indication information includes a third configuration parameter, and the third configuration parameter is used for indicating a cycle of the first count value.

For example, the indication information may be carried in radio resource control information RRC, and/or the indication information is carried in media access control information MAC CE, and/or the indication information is carried in first downlink control information DCI.

Optionally, in an implementation, the start moment of the on duration timer meets the following second formula:

$$\lfloor \text{cdrx-count modulo (drx-cycle)} \rfloor = \lfloor (\text{drx-StartOffset}) \text{modulo(drx-cycle)} \rfloor,$$

where
initial cdrx-count = 0, and when a system frame number changes, cdrx-count = (cdrx-count + 1) modulo Y; cdrx-count is used for indicating the first count value; Y is used for indicating the cycle of the first count value; drx-StartOffset is used for indicating a subframe in which a CDRX cycle starts; SFN is used for indicating the system frame number; subframe number is used for indicating a subframe number; and drx-cycle is used for indicating the CDRX cycle.

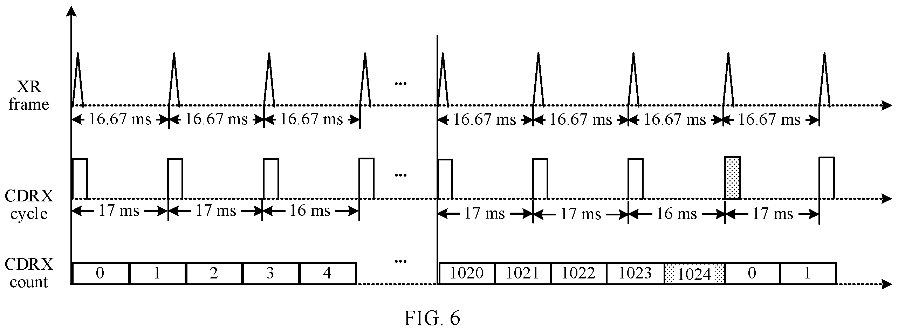

For example, the first count value may be drx-count. For an implementation process, refer to related descriptions in a subsequent implementation 2. For example, refer to related descriptions of FIG. 6. Details are not described herein again.

In this embodiment of this application, the start moment of the on duration timer in the CRDX may be counted based on the first count value, so that the start moment of the on duration timer in the CDRX matches the cycle for transmitting the service data frame (for example, an XR service). This ensures that the user equipment can transmit the service data frame within the on duration timer in the CDRX, to achieve energy saving for the user equipment. According to this solution of this application, no other processing needs to be performed after one time of configuration, and the start moment of the on duration timer in the CDRX can be adjusted with small signaling overheads.

Optionally, in an implementation, the indication information includes second DCI, and at least one bit in the second DCI is used for indicating a first time offset between a moment at which the second DCI is received and the start moment of the on duration timer.

Optionally, the second DCI may be UE group common DCI.

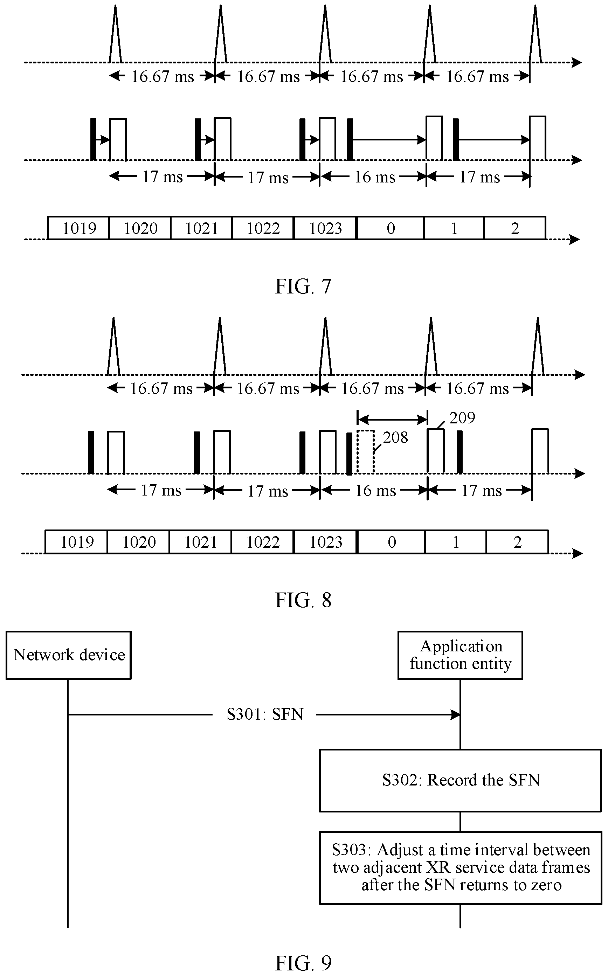

For example, for an implementation process, refer to related descriptions of an example 1 in a subsequent implementation 3. For example, refer to related descriptions of FIG. 7. Details are not described herein again.

Optionally, in an implementation, the indication information includes third DCI, at least one bit in the third DCI is used for indicating a second time offset, and the second time offset is used for adjusting the start moment of the on duration timer.

Optionally, the third DCI is UE group common DCI.

For example, for an implementation process, refer to related descriptions of an example 2 in the subsequent implementation 3. For example, refer to related descriptions of FIG. 8. Details are not described herein again.

In this embodiment of this application, the start moment of the on duration timer in the CDRX may be adjusted based on the indication information, so that the start moment of the on duration timer in the CDRX matches the cycle for transmitting the service data frame. This ensures that the user equipment can transmit the service data frame within the on duration timer in the CDRX, to achieve energy saving for the user equipment.

The following describes in detail implementations of the adjustment method for connected discontinuous reception in embodiments of this application with reference to FIG. 5 to FIG. 11.

Implementation 1

For example, when a system frame returns to zero, a second subframe offset (for example, drx-StartOffset2 * x) may be obtained based on a first configuration parameter (for example, drx-StartOffset2) and a second configuration parameter (for example, X), and a start moment of an on duration timer is determined based on the second subframe offset.

For example, initial x = 0, and when a system frame number returns to zero, x = x modulo X + 1, and drx-StartOffset = drx-StartOffset + drx-StartOffset2 * x. The start moment of the on duration timer meets the following first formula:

$$[[(SFN \times 10) + \text{subframe number}] \text{ modulo (drx-cycle)}] = [(\text{drx- StartOffset})\text{modulo}(\text{drx-cycle})]$$

, where

drx-StartOffset is used for indicating a subframe in which a CDRX cycle starts; drx-StartOffset2 is used for indicating a first subframe offset; X is used for indicating a cycle of the first subframe offset; drx-StartOffset2 * x is used for indicating the second subframe offset; SFN is used for indicating the system frame number; subframe number is used for indicating a subframe number; and drx-cycle is used for indicating the CDRX cycle.

In an example, drx-StartOffset2 = 10, and X = 5. A compensation cycle for the second subframe offset (for example, drx-StartOffset2 * x) may be (+10, +20, +30, +40, +50). After the system frame number returns to zero, cyclic compensation is performed on a start moment of an on duration timer in CDRX based on the compensation cycle.

For example, as shown in (a) in FIG. 5, an example in which a cycle of an XR service is 16.67 ms, a CDRX cycle is 50/3 ms, and initially configured drx-StartOffset is 0 is used for description.

As shown in (a) in FIG. 5, after the first cycle of the system frame elapses, in other words, after the system frame returns to zero for the first time, a CDRX on cycle obtained through adjustment based on the second subframe offset is indicated by 204. For example, at a compensation moment, to be specific, a zero-crossing point of the system frame, the second subframe offset (for example, +10 subframes) may be determined. Because the system frame number returns to zero, the CDRX cycle is started at a position 203 shown in (a) in FIG. 5. If the CDRX cycle is not adjusted, the CDRX cycle is started at a position 205 shown in (a) in FIG. 5. A moment at which the CDRX cycle is to be started is adjusted at the compensation moment based on the second subframe offset. Therefore, after the adjustment, the CDRX cycle is started at a position 206 shown in (a) in FIG. 5. Because the moment at which the CDRX cycle is started is adjusted to the position 206, the CDRX on cycle matches a cycle of an XR service frame. Similarly, after a next cycle of the system frame elapses, in other words, after the system frame returns to zero for the second time, as shown in (b) in FIG. 5, when the system frame returns to zero, to be specific, at a compensation moment, it is determined that the second subframe offset is +20 subframes. A moment at which the CDRX cycle is to be started is adjusted based on the second subframe offset. A CDRX on cycle obtained through adjustment is indicated by a position 207. As shown in (b) in FIG. 5, after the system frame crosses a zero point, the CDRX on cycle may be adjusted by compensating for an offset of 20 subframes, so that the CDRX on cycle matches the cycle of the XR service data frame. Similarly, after a next cycle of the system frame elapses, in other words, after the system frame returns to zero for the third time, as shown in (c) in FIG. 5, when the system frame returns to zero, to be specific, at a compensation moment, it is determined that the second subframe offset is +30 subframes. A moment at which the CDRX cycle is to be started is adjusted based on the second subframe offset. A CDRX on cycle obtained through adjustment is indicated by a position 208. As shown in (c) in FIG. 5, after the system frame crosses a zero point, the CDRX on cycle may be adjusted by compensating for an offset of 30 subframes, so that the CDRX on cycle matches the cycle of the XR service data frame. Similarly, after a next cycle of the system frame elapses, in other words, after the system frame returns to zero for the fourth time, as shown in (d) in FIG. 5, when the system frame returns to zero, to be specific, at a compensation moment, it is determined that the second subframe offset is +40 subframes. A moment at which the CDRX cycle is to be started is adjusted based on the second subframe offset. A CDRX on cycle obtained through adjustment is indicated by a position 209. As shown in (d) in FIG. 5, after the system frame crosses a zero point, the CDRX on cycle may be adjusted by compensating for an offset of 40 subframes, so that the CDRX on cycle matches the cycle of the XR service. Similarly, after a next cycle of the system frame elapses, in other words, after the system frame returns to zero for the fifth time, as shown in (e) in FIG. 5, when the system frame returns to zero, to be specific, at a compensation moment, it is determined that the second subframe offset is +50 subframes. A moment at which the CDRX cycle is to be started is adjusted based on the second subframe offset. A CDRX on cycle obtained through adjustment is indicated by a position 210. As shown in (e) in FIG. 5, after the system frame crosses a zero point, the CDRX on cycle may be adjusted by compensating for an offset of 50 subframes, so that the CDRX on cycle matches the cycle of the XR service data frame. It can be learned from (a) in FIG. 5 and (e) in FIG. 5 that, after the offset of 50 subframes is compensated for, the CDRX on cycle returns to an initial state (for example, a left diagram in a schematic diagram shown in (a) in FIG. 5). To be specific, the compensation for the offset of 50 subframes may be considered as the end of a cycle. Each time the system frame crosses a zero point subsequently, the CDRX on cycle may be periodically adjusted based on the foregoing compensation cycle (for example, +10, +20, +30, +40, +50), so that the CDRX on cycle matches the cycle of the XR service frame.

For example, a network device or user equipment may determine the second subframe offset when the system frame returns to zero. The second subframe offset is used for determining the start moment of the on duration timer.

It should be understood that the foregoing descriptions about the first configuration parameter and the second configuration parameter are examples, and specific values of the first configuration parameter and the second configuration parameter are not limited in this application.

For example, indication information is carried in radio resource control information RRC, and/or the indication information is carried in media access control information MAC CE, and/or the indication information is carried in first downlink control information DCI.

In this embodiment of this application, the start moment of the on duration timer in the CDRX may be adjusted based on the first configuration parameter and the second configuration parameter, so that the start moment of the on duration timer in the CDRX matches a cycle of a service data frame (for example, an XR service). This ensures that the user equipment can transmit the service data frame within the on duration timer in the CDRX, to achieve energy saving for the user equipment. In this embodiment of this application, because the start moment of the on duration timer in the CDRX can be adjusted based on the first configuration parameter and the second configuration parameter, an existing CDRX cycle calculation formula may not be modified, so that compatibility with the user equipment is good.

Implementation 2

For example, an existing rule of counting a CDRX cycle by using an SFN may be modified, and a CDRX cycle is counted based on a first count value. A start moment of an on duration timer in CDRX is adjusted.

Optionally, a network device may send indication information to user equipment, where the indication information includes third configuration parameter. For example, the third configuration parameter is a cycle Y of the first count value.

Optionally, the start moment of the on duration timer meets the following second formula:

$$\lfloor \text{cdrx-count modulo (drx-cycle)} \rfloor = \lfloor (\text{drx-StartOffset}) \text{modulo} (\text{drx-cycle}) \rfloor,$$

where
initial cdrx-count = 0, and when a system frame number changes, cdrx-count = (cdrx-count + 1) modulo Y; cdrx-count is used for indicating the first count value; Y is used for indicating the cycle of the first count value; drx-StartOffset is used for indicating a subframe in which a CDRX cycle starts; SFN is used for indicating the system frame number; subframe number is used for indicating a subframe number; and drx-cycle is used for indicating the CDRX cycle.

For example, as shown in FIG. 6, the cycle Y of the first count value may be equal to 1025. To be specific, 0 to 1024 in a CDRX count are used as a cycle. The start moment of the on duration timer may be adjusted based on the first count value and the second formula, so that the start moment of the on duration timer in the CDRX matches a cycle of a service data frame (for example, an XR service).

In this embodiment of this application, a CDRX on cycle may be adjusted by configuring the first count value Y and based on the second formula. It can be learned from the second formula that, when the system frame returns to zero, the first count value may not return to zero. In other words, the configuration of the first count value can enable the CDRX on cycle to cross any moment at which the system frame returns to zero, so that the CDRX on cycle matches a cycle of a service.

It should be understood that the foregoing descriptions about the first count value and the third configuration parameter are examples, and specific values of the first count value and the third configuration parameter are not limited in this application.

In this embodiment of this application, the start moment of the on duration timer in the CRDX may be counted based on the first count value, so that the start moment of the on duration timer in the CDRX matches the cycle of the service data frame (for example, the XR service). This ensures that the user equipment can transmit service data within the on duration timer in the CDRX, to achieve energy saving for the user equipment. According to this solution of this application, no other processing needs to be performed after one time of configuration, and the start moment of the on duration timer in the CDRX can be adjusted with small signaling overheads.

Implementation 3

Optionally, in this embodiment of this application, a start moment of an on duration timer in CDRX may be dynamically adjusted, so that the start moment of the on duration timer in the CDRX matches a cycle of a service data frame (for example, an XR service).

Example 1

In an example, a network device may send indication information to user equipment, where the indication information includes second DCI. At least one bit in the second DCI is used for indicating a first time offset between a moment at which the second DCI is received and the start moment of the on duration timer.
For example, the second DCI may include N bits. The N bits may be used for indicating an offset between a moment at which the user equipment receives the second DCI and the start moment of the on duration timer.
For example, N = 4 bits in the DCI are used as an example for description. The four bits are used for indicating a subframe offset (for example, a length of a single arrow shown in FIG. 7) between the moment at which the user equipment receives the second DCI and the start moment of the on duration timer. The four bits may be used for indicating 0 ms to 16 ms. As shown in FIG. 7, before the on duration timer is started each time, a moment at which the on duration timer is to be started may be dynamically indicated by the second DCI. The start moment of the on duration timer in the CDRX is dynamically adjusted, so that the start moment of the on duration timer in the CDRX matches the cycle of the service data frame (for example, an XR service data frame).
It should be noted that an example in which a unit of the N bits is milliseconds is used for description above.
Optionally, a unit of the N bits may be a slot (slot) or z milliseconds, where z may be a value. For example, z may be 0.125, and the z milliseconds may be 0.125 milliseconds. Assuming that a value of the N bits is 10 and a unit is 0.125 milliseconds, the N bits indicate 10 * 0.125 = 1.25 ms. For example, assuming that a value of the N bits is 10 and a unit is a slot, the N bits indicate 10 slots.
Optionally, the second DCI sent by the network device to the user equipment may be UE group common DCI.
Optionally, A structure of the second DCI may be a new DCI format, or may be implemented by modifying a structure of existing DCI. For example, the second DCI may be in a structure of DCI 2_6. For UE, the existing DCI 2_6 includes 1+N bits. In this embodiment, N bits of the DCI 2_6 may be redefined, to meet a requirement of the second DCI.
Optionally, a subframe offset between a moment at which a MAC CE is received and the start moment of the on duration timer may be indicated by the MAC CE.
For example, when a MAC CE message is used for indicating a subframe offset between a moment at which a MAC CE is received and the start moment of the on duration timer, a MAC CE may be sent at the end of a frame of a previous cycle to indicate a subframe offset between a moment at which a MAC CE is received in a next cycle and the start moment of the on duration timer.
For example, an example in which a CDRX cycle is 17 ms, 17 ms, and 16 ms is used for description. A MAC CE may be sent within the last on duration timer in a cycle before an SFN returns to zero. For example, the MAC CE may be sent within an on duration timer when the SFN is 1023. A subframe offset between a moment at which the MAC CE is received and a start moment of the on duration timer may be indicated by the MAC CE.

Example 2

In an example, a network device may send indication information to user equipment, where the indication information includes third DCI. At least one bit in the third DCI is used for indicating a second time offset, and the second time offset is used for adjusting the start moment of the on duration timer.
For example, the third DCI may include N bits. The N bits may be used for indicating the second time offset, and the second time offset is used for adjusting the start moment of the on duration timer.
For example, N = 4 bits in the third DCI are used as an example for description. The four bits may indicate the second time offset, and the second time offset is used for adjusting the start moment of the on duration timer. As shown in FIG. 8, the four bits may be used for indicating a time offset between an on duration timer 208 and an on duration timer 209. A start moment of the on duration timer 208 may be a moment obtained according to an existing rule for counting a CDRX cycle by using a system frame. For the on duration timer 209, a start moment of the on duration timer is obtained through adjustment based on the on duration timer 208 and the second time offset. For example, the four bits may indicate 0 ms to 16 ms. As shown in FIG. 8, the four bits indicate 10 ms. To be specific, the on duration timer 209 is obtained through adjustment of 10 ms based on the on duration timer 208. In this embodiment of this application, before the on duration timer is started each time, a moment at which the on duration timer is to be started may be dynamically indicated by the third DCI. The start moment of the on duration timer in the CDRX is dynamically adjusted, so that the start moment of the on duration timer in the CDRX matches the cycle of the service data frame (for example, the XR service).

It should be noted that an example in which a unit of the N bits is milliseconds is used for description above.

Optionally, a unit of the N bits may be a slot (slot) or z milliseconds, where z may be a value. For example, z may be 0.125, and the z milliseconds may be 0.125 milliseconds. Assuming that a value of the N bits is 10 and a unit is 0.125 milliseconds, the N bits indicate 10 * 0.125 = 1.25 ms. For example, assuming that a value of the N bits is 10 and a unit is a slot, the N bits indicate 10 slots.

Optionally, the third DCI sent by the network device to the user equipment may be UE group common DCI.

Optionally, A structure of the third DCI may be a new DCI format, or may be implemented by modifying a structure of existing DCI. For example, the third DCI may be in a structure of DCI 2_6. For UE, the existing DCI 2_6 includes 1+N bits. In this embodiment, N bits of the DCI 2_6 may be redefined, to meet a requirement of the third DCI.

Optionally, a subframe offset between a moment at which a MAC CE is received and the start moment of the on duration timer may be indicated by the MAC CE.

For example, when a MAC CE message is used for indicating a subframe offset between a moment at which a MAC CE is received and the start moment of the on duration timer, a MAC CE may be sent at the end of a frame of a previous cycle to indicate a subframe offset between a moment at which a MAC CE is received in a next cycle and the start moment of the on duration timer.

In this embodiment of this application, the start moment of the on duration timer in the CDRX may be adjusted based on the indication information, so that the start moment of the on duration timer in the CDRX matches a cycle of service frame data. This ensures that the user equipment can transmit the service data frame within the on duration timer in the CDRX, to achieve energy saving for the user equipment.

It should be noted that a network device and user equipment may adjust a moment of an on duration timer in CDRX based on related descriptions in the implementation 1 to the implementation 3, so that a CDRX cycle matches a cycle of a service data frame (for example, an XR service data frame).

It should be understood that, in the descriptions of the implementation 1 to the implementation 3, an example in which the service data frame is an XR service data frame is used for description. The service data frame may alternatively be a data frame of another service, or may be another data frame that can be sent and received in the CDRX mechanism. This is not limited in this application.

Implementation 4

Optionally, in this embodiment of this application, a CDRX cycle may not need to be modified, and a cycle of an XR service data frame is adjusted, so that a start moment of an on duration timer in CDRX matches the cycle of the service data frame. This ensures that user equipment can transmit the service data frame within the on duration timer in the CDRX, to achieve energy saving for the user equipment.

Example 1

Optionally, in this embodiment of this application, an SFN may be transmitted between a network device and an application function entity. The application function entity may record the SFN, and adjust a cycle of an XR service data frame when the SFN returns to zero, as shown in FIG. 9.

It should be understood that the application function entity may be an application server that generates the XR service data frame.

FIG. 9 is a schematic diagram of a transmission method for a service data frame according to an embodiment of this application. The transmission method shown in FIG. 9 includes step S301 to step S303. The following separately describes step S301 to step S303 in detail.

It should be understood that, in FIG. 9, an example in which a service data frame is an XR service data frame is used for description. The service data frame may alternatively be a data frame of another service, or may be another data frame that can be sent and received in the CDRX mechanism. This is not limited in this application.

Step S301: A network device sends an SFN to an application function entity.

Optionally, the network device may include a base station and a core network device. In step S301, the base station may send the SFN to the core network device, and the core network device sends the SFN to the application function entity.

Optionally, the network device may include a core network device, and different devices in the network device can share the SFN. In this case, the core network device may directly send the SFN to the application function entity.

It should be understood that the foregoing descriptions are examples. This is not limited in this application.

Step S302: The application function entity records the SFN.

Step S303: The application function entity adjusts a time interval between two adjacent XR service data frames after the SFN returns to zero.

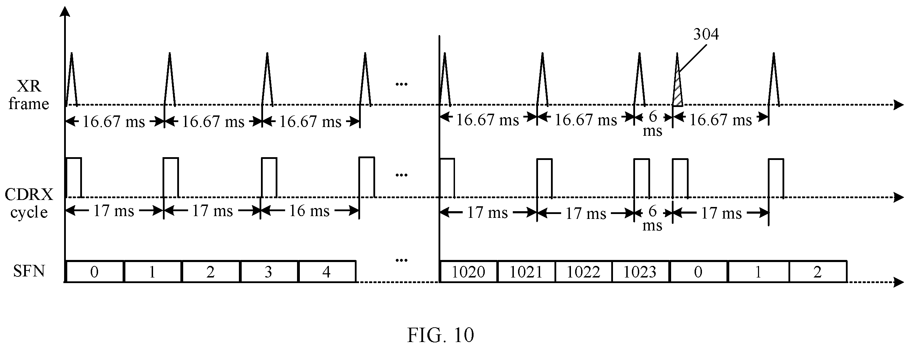

For example, as shown in FIG. 10, after the SFN returns to zero, the application function entity may adjust the time interval between two adjacent XR service data frames, so that a cycle for transmitting the XR service data frame matches a CDRX cycle. For example, after the SFN returns to zero, the application function entity may adjust an interval at which a next XR service data frame is to be generated to 6 ms, as indicated by 304 in FIG. 10. In this solution of this application, the application function entity may record the SFN, and adjust the time interval between two adjacent XR service data frames after the SFN returns to zero, so that an XR cycle matches the CDRX cycle.

In this embodiment of this application, user equipment may monitor the XR service data frame based on an existing CDRX formula, and the application function entity may adjust the time interval between two adjacent service frames once to make a cycle of the service frame match the CDRX cycle.

Example 2

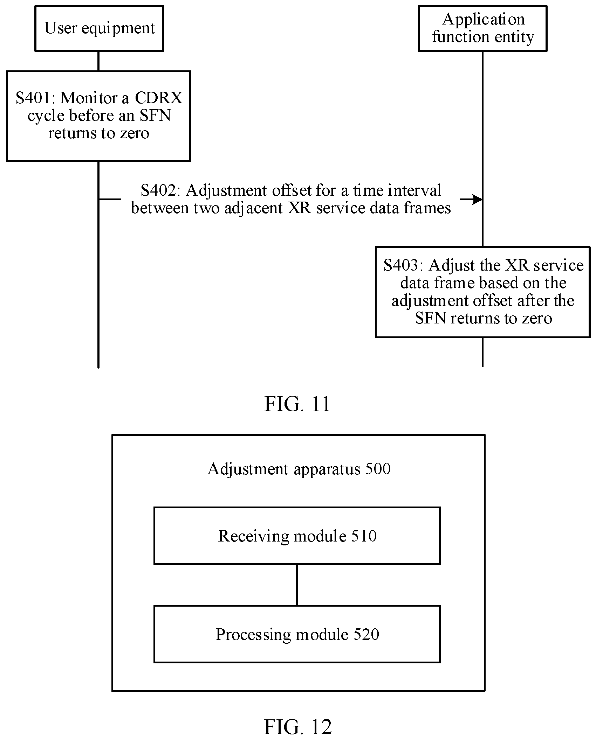

Optionally, in this embodiment of this application, user equipment may monitor an SFN, and send an adjustment offset for an XR cycle to an application function entity at a later stage of a CDRX cycle before the SFN returns to zero. After the SFN returns to zero, the application function entity may adjust the XR cycle based on the adjustment offset, so that the XR cycle matches the CDRX cycle, as shown in FIG. 11.

FIG. 11 is a schematic diagram of a transmission method for service frame data according to an embodiment of this application. The transmission method shown in FIG. 11 includes step S401 to step S403. The following separately describes step S401 to step S403 in detail.

It should be understood that, in FIG. 11, an example in which a service data frame is an XR service data frame is used for description. The service data frame may alternatively be a data frame of another service, or may be another data frame that can be sent and received in the CDRX mechanism. This is not limited in this application.

Step S401: User equipment monitors a CDRX cycle before an SFN.

Optionally, the user equipment may monitor a change in the SFN, and send an adjustment offset for a time interval between two adjacent XR service data frames to an application function entity in one CDRX cycle before the SFN returns to zero or in two CDRX cycles before the SFN returns to zero.

For example, as shown in FIG. 10, the CDRX cycle before the SFN returns to zero may be a CDRX cycle corresponding to an SFN ranging from 1020 to 1023.

Step S402: The user equipment sends the adjustment offset for the time interval between two adjacent XR service data frames to the application function entity.

Optionally, as indicated by 304 in FIG. 10, the adjustment offset for the time interval between two adjacent XR service data frames is 10 subframes, namely, 10 ms. In other words, a next XR data frame is generated 10 ms earlier.

Step S403: The application function entity adjusts the XR service data frame based on the adjustment offset after the SFN returns to zero.

It should be noted that a difference between the example 2 and the example 1 lies in that the application function entity does not need to record the SFN, and the application function entity may adjust, based on the adjustment offset for the XR cycle that is sent by the user equipment, the time interval between two adjacent XR service data frames after the SFN returns to zero.

In this embodiment of this application, the user equipment may monitor the XR service data frame based on an existing CDRX formula, and the application function entity may adjust the time interval between two adjacent service frames once to make a cycle of the XR service data frame match the CDRX cycle.

In this embodiment of this application, after the SFN returns to zero, the time interval between two adjacent XR service data frames may be adjusted, so that the cycle of the XR service data frame matches the CDRX cycle. In this embodiment of this application, the CDRX cycle does not need to be adjusted. Therefore, an existing rule for counting a CDRX cycle does not need to be modified. In this way, any user equipment supporting the XR service can implement this solution, so that compatibility with the user equipment is good.

It should be understood that, in related descriptions of the implementation 4, an example in which the service data frame is an XR service data frame is used for description. The service data frame may alternatively be a data frame of another service, or may be another data frame that can be sent and received in the CDRX mechanism. This is not limited in this application.

It should be understood that, the foregoing examples are provided to help a person skilled in the art understand embodiments of this application, but are not intended to limit embodiments of this application to specific numerical values or specific scenarios illustrated. Clearly, a person skilled in the art may perform various equivalent modifications or changes based on the foregoing examples, and such modifications or changes also fall within the scope of embodiments of this application.

The communication method provided in embodiments of this application is described above in detail with reference to FIG. 1 to FIG. 11. Apparatus embodiments of this application are described below in detail with reference to FIG. 12 to FIG. 14. It should be understood that the apparatus in embodiments of this application may perform various methods in embodiments of this application. In other words, for a specific operating process of the following various products, refer to corresponding processes in the method embodiments.

FIG. 12 is a schematic diagram of a structure of an adjustment apparatus according to an embodiment of this application. The adjustment apparatus 500 includes a receiving module 510 and a processing module 520.

It should be understood that the adjustment apparatus 500 may be the user equipment in the foregoing embodiments.

The receiving module 510 is configured to receive indication information sent by a network device, where the indication information is used for determining a start moment of an on duration timer in CDRX. The processing module 520 is configured to adjust the start moment of the on duration timer based on the indication information.

Optionally, in an embodiment, the indication information includes a first configuration parameter and a second configuration parameter, the first configuration parameter is used for indicating a first subframe offset, and the second configuration parameter is used for indicating a cycle of the first subframe offset; and the processing module 520 is specifically configured to:

determine a second subframe offset based on the first configuration parameter and the second configuration parameter, where the second subframe offset is used for determining the start moment of the on duration timer.

Optionally, in an embodiment, the processing module 520 is specifically configured to:

determine the second subframe offset based on the first configuration parameter and the second configuration parameter when a system frame returns to zero.

Optionally, in an embodiment, the start moment of the on duration timer meets the following first formula:

$$[[(SFN \times 10) + \text{subframe number}] \text{ modulo (drx-cycle)}] = [(\text{drx- StartOffset}) \text{modulo}(\text{drx-cycle})]$$

, where

drx-StartOffset = drx-StartOffset + drx-StartOffset2 * x; initial x = 0, and when a system frame number returns to zero, x = x modulo X + 1; drx-StartOffset is used for indicating a subframe in which a CDRX cycle starts; drx-StartOffset2 is used for indicating the first subframe offset; X is used for indicating the cycle of the first subframe offset; drx-StartOffset2 * x is used for indicating the second subframe offset; SFN is used for indicating the system frame number; subframe number is used for indicating a subframe number; and drx-cycle is used for indicating the CDRX cycle.

Optionally, in an embodiment, the start moment of the on duration timer is a moment obtained based on a first count value.

Optionally, in an embodiment, the indication information comprises a third configuration parameter, and the third configuration parameter is used for indicating a cycle of the first count value.

Optionally, in an embodiment, the start moment of the on duration timer meets the following second formula:

$$\lfloor \text{cdrx-count modulo (drx-cycle)} \rfloor = \lfloor (\text{drx-StartOffset}) \text{modulo}(\text{drx-cycle}) \rfloor,$$

where

initial cdrx-count = 0, and when a system frame number changes, cdrx-count = (cdrx-count + 1) modulo Y; cdrx-count is used for indicating the first count value; Y is used for indicating the cycle of the first count value; drx-StartOffset is used for indicating a subframe in which a CDRX cycle starts; SFN is used for indicating the system frame number; subframe number is used for indicating a subframe number; and drx-cycle is used for indicating the CDRX cycle.

Optionally, in an embodiment, the indication information is carried in radio resource control information RRC, and/or the indication information is carried in media access control information MAC CE, and/or the indication information is carried in first downlink control information DCI.

Optionally, in an embodiment, the indication information comprises second DCI, and at least one bit in the second DCI is used for indicating a first time offset between a moment at which the second DCI is received and the start moment of the on duration timer.

Optionally, in an embodiment, the second DCI is UE group common DCI.

Optionally, in an embodiment, the indication information comprises third DCI, at least one bit in the third DCI is used for indicating a second time offset, and the second time offset is used for adjusting the start moment of the on duration timer.

Optionally, in an embodiment, the third DCI is UE group common DCI.

It should be noted that the adjustment apparatus 500 is embodied in a form of a functional module. The term "module" herein may be implemented in a form of software and/or hardware. This is not specifically limited.

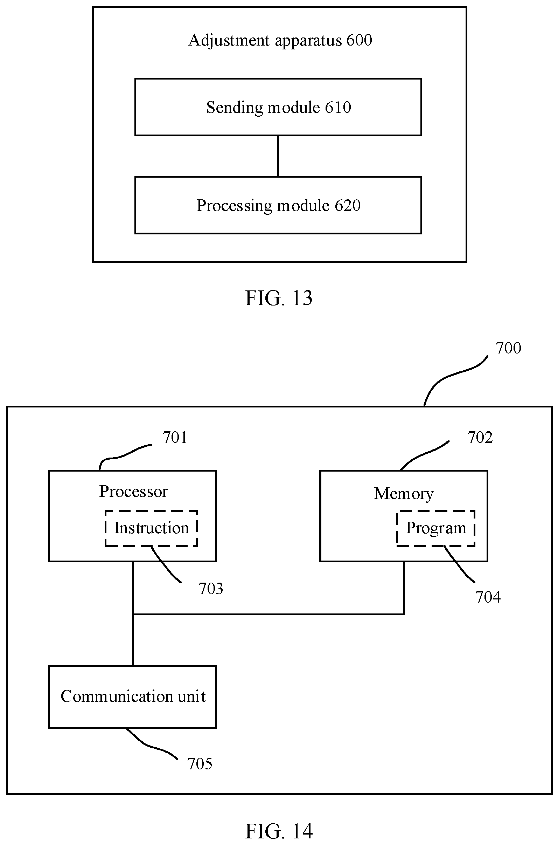

FIG. 13 is a schematic diagram of a structure of an adjustment apparatus according to an embodiment of this application. The adjustment apparatus 600 includes a sending module 610 and a processing module 620.

It should be understood that the adjustment apparatus 500 may be the network device in the foregoing embodiments.

The sending module 610 is configured to receive indication information sent by a network device, where the indication information is used for determining a start moment of an on duration timer in CDRX. The processing module 620 is configured to adjust the start moment of the on duration timer based on the indication information.

Optionally, in an embodiment, the indication information includes a first configuration parameter and a second configuration parameter, the first configuration parameter is used for indicating a first subframe offset, and the second configuration parameter is used for indicating a cycle of the first subframe offset; and the processing module 620 is specifically configured to:

determine a second subframe offset based on the first configuration parameter and the second configuration parameter, where the second subframe offset is used for determining the start moment of the on duration timer.

Optionally, in an embodiment, the processing module 620 is specifically configured to:

determine the second subframe offset based on the first configuration parameter and the second configuration parameter when a system frame returns to zero.

Optionally, in an embodiment, the start moment of the on duration timer meets the following first formula:

$$[[(SFN \times 10) + \text{subframe number}] \bmod (\text{drx-cycle})] = [(\text{drx- StartOffset}) \bmod (\text{drx-cycle})]$$

, where

drx-StartOffset = drx-StartOffset + drx-StartOffset2 * x; initial x = 0, and when a system frame number returns to zero, x = x modulo X + 1; drx-StartOffset is used for indicating a subframe in which a CDRX cycle starts; drx-StartOffset2 is used for indicating the first subframe offset; X is used for indicating the cycle of the first subframe offset; drx-StartOffset2 * x is used for indicating the second subframe offset; SFN is used for indicating the system frame number; subframe number is used for indicating a subframe number; and drx-cycle is used for indicating the CDRX cycle.

Optionally, in an embodiment, the start moment of the on duration timer is a moment obtained based on a first count value.

Optionally, in an embodiment, the indication information comprises a third configuration parameter, and the third configuration parameter is used for indicating a cycle of the first count value.

Optionally, in an embodiment, the start moment of the on duration timer meets the following second formula:

$$\lfloor \text{cdrx-count} \bmod (\text{drx-cycle}) \rfloor = \lfloor (\text{drx-StartOffset}) \bmod (\text{drx-cycle}) \rfloor,$$

where

initial cdrx-count = 0, and when a system frame number changes, cdrx-count = (cdrx-count + 1) modulo Y; cdrx-count is used for indicating the first count value; Y is used for indicating the cycle of the first count value; drx-StartOffset is used for indicating a subframe in which a CDRX cycle starts; SFN is used for indicating the system frame number; subframe number is used for indicating a subframe number; and drx-cycle is used for indicating the CDRX cycle.

Optionally, in an embodiment, the indication information is carried in radio resource control information RRC, and/or the indication information is carried in media access control information MAC CE, and/or the indication information is carried in first downlink control information DCI.

Optionally, in an embodiment, the indication information comprises second DCI, and at least one bit in the second DCI is used for indicating a first time offset between a moment at which the second DCI is sent and the start moment of the on duration timer.

Optionally, in an embodiment, the second DCI is UE group common DCI.

Optionally, in an embodiment, the indication information comprises third DCI, at least one bit in the third DCI is used for indicating a second time offset, and the second time offset is used for adjusting the start moment of the on duration timer.

Optionally, in an embodiment, the third DCI is UE group common DCI.

It should be noted that the adjustment apparatus 600 is embodied in a form of a functional module. The term "module" herein may be implemented in a form of software and/or hardware. This is not specifically limited.

For example, the "module" may be a software program, a hardware circuit, or a combination thereof for implementing the foregoing functions. The hardware circuit may include an application specific integrated circuit (application specific integrated circuit, ASIC), an electronic circuit, a processor (for example, a shared processor, a dedicated processor, or a packet processor) configured to execute one or more software or firmware programs, a memory, a combined logic circuit, and/or another suitable component that supports the described functions.

Therefore, the units of each example described in embodiments of this application may be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it is not to be considered that the implementation goes beyond the scope of this application.

FIG. 14 is a schematic diagram of a structure of an adjustment apparatus according to this application. A dotted line in FIG. 14 indicates that the unit or the module is optional. The adjustment apparatus 700 may be configured to implement the adjustment method for connected discontinuous reception in the foregoing method embodiments.

Optionally, the communication apparatus 700 includes one or more processors 701. The one or more processors 701 may support the communication apparatus 700 in implementing the method for generating a high-dynamic-range video in the method embodiments. The processor 701 may be a general-purpose processor, a dedicated processor, or the like. For example, the processor 701 may be a central processing unit (central processing unit, CPU), a digital signal processor (digital signal processor, DSP), an application specific integrated circuit (application specific integrated circuit, ASIC), a field programmable gate array (field programmable gate array, FPGA), or another programmable logic device, for example, a discrete gate, a transistor logic device, or a discrete hardware component.

Optionally, the processor 701 may be configured to control the communication apparatus 700, execute a software program, and process data of the software program. The communication apparatus 700 may further include a communication unit 705 to implement input (reception) and output (transmission) of a signal.

For example, the communication apparatus 700 may be a chip, and the communication unit 705 may be an input circuit and/or an output circuit of the chip, or the communication unit 705 may be a communication interface of the chip. The chip may be used as a component of a terminal device or another electronic device.

For another example, the communication apparatus 700 may be a terminal device, and the communication unit 705 may be a transceiver of the terminal device, or the communication unit 705 may and 700 may include one or more memories 702 that store a program 704. The program 704 may be run by the processor 701 to generate an instruction 703, so that the processor 701 performs, according to the instruction 703, the adjustment method for connected discontinuous reception in the foregoing method embodiments.

Optionally, the memory 702 may further store data.

Optionally, the processor 701 may further read the data stored in the memory 702. The data and the program 704 may be stored at the same storage address, or the data and the program 704 may be stored at different storage addresses.

Optionally, the processor 701 and the memory 702 may be disposed separately or integrated together, for example, integrated on a system on chip (system on chip, SOC) of the terminal device.

Optionally, this application further provides a computer program product. When the computer program product is executed by the processor 701, the adjustment method for connected discontinuous reception in any one of the method embodiments of this application is implemented.

For example, the computer program product may be stored in the memory 702, for example, is the program 704. The program 704 is finally converted into an executable target file that can be executed by the processor 701 through processing processes such as preprocessing, compilation, assembly, and linking.

Optionally, this application further provides a computer-readable storage medium that stores a computer program. When the computer program is executed by a computer, the adjustment method for connected discontinuous reception in any one of the method embodiments of this application is implemented. The computer program may be a high-level language program or an executable object program.

For example, the computer-readable storage medium is the memory 702. The memory 702 may be a volatile memory or a non-volatile memory, or the memory 702 may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it is not to be considered that the implementation goes beyond the scope of this application.

A person skilled in the art can clearly understand that, for ease and conciseness of description, for specific working processes of the foregoing systems, apparatuses, and units, reference may be made to the corresponding processes in the foregoing method embodiments, and details are not described herein again.

In the several embodiments provided in this application, it should be understood that the disclosed system, apparatus, and method may be implemented in other manners. For example, the described embodiments of the electronic device are merely examples. For example, division into the modules or units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and components shown as units may or may not be physical units, that is, may be located in one position, or may be distributed on a plurality of network units. Some or all of the units may be selected according to actual needs to achieve the objectives of the solutions of the embodiments.

In addition, functional units in embodiments of this application may be integrated into one processing unit, or each of the units may be physically separated, or two or more units may be integrated into one unit.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In addition, the term "and/or" in this specification describes only an association relationship between associated objects and indicates that three relationships may exist. For example, A and/or B may indicate the following three cases: Only A exists, both A and B exist, and only B exists. In addition, the character "/" in this specification usually indicates an "or" relationship between the associated objects.

When the function is implemented in the form of a software functional unit and sold or used as an independent product, the integrated unit may be stored in a computer-readable storage medium. Based on such understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims. In conclusion, the foregoing descriptions are merely example embodiments of this application, and are not intended to limit the protection scope of this application. Any modification, equivalent replacement, or improvement made without departing from the spirit and principle of this application shall fall within the protection scope of this application.

**Claims**

1. An adjustment method for connected discontinuous reception, comprising:

   receiving indication information sent by a network device, wherein the indication information is used for determining a start moment of an on duration timer in connected discontinuous reception CDRX; and
   adjusting the start moment of the on duration timer based on the indication information.

2. The adjustment method according to claim 1, wherein the indication information comprises a first configuration parameter and a second configuration parameter, the first configuration parameter is used for indicating a first subframe offset, and the second configuration parameter is used for indicating a cycle of the first subframe offset; and
   the adjusting the start moment of the on duration timer based on the indication information comprises:
   determining a second subframe offset based on the first configuration parameter and the second configuration parameter, wherein the second subframe offset is used for determining the start moment of the on duration timer.

3. The adjustment method according to claim 2, wherein the determining a second subframe offset based on the first configuration parameter and the second configuration parameter comprises:
determining the second subframe offset based on the first configuration parameter and the second configuration parameter when a system frame returns to zero.

4. The adjustment method according to claim 2 or 3, wherein the start moment of the on duration timer meets the following first formula:

[[(SFN × 10) + subframe number] modulo (drx-cycle)] = [(drx- StartOffset)modulo(drx-cycle)], wherein
drx-StartOffset = drx-StartOffset + drx-StartOffset2 * x; initial x = 0, and when a system frame number returns to zero, x = x modulo X + 1; drx-StartOffset is used for indicating a subframe in which a CDRX cycle starts; drx-StartOffset2 is used for indicating the first subframe offset; X is used for indicating the cycle of the first subframe offset; drx-StartOffset2 * x is used for indicating the second subframe offset; SFN is used for indicating the system frame number; subframe number is used for indicating a subframe number; and drx-cycle is used for indicating the CDRX cycle.

5. The adjustment method according to claim 1, wherein the start moment of the on duration timer is a moment obtained based on a first count value.

6. The adjustment method according to claim 5, wherein the indication information comprises a third configuration parameter, and the third configuration parameter is used for indicating a cycle of the first count value.

7. The adjustment method according to claim 6, wherein the start moment of the on duration timer meets the following second formula:

$$\lfloor \text{cdrx-count modulo (drx-cycle)} \rfloor = \lfloor (\text{drx-StartOffset}) \text{modulo}(\text{drx-cycle}) \rfloor,$$

wherein
initial cdrx-count = 0, and when a system frame number changes, cdrx-count = (cdrx-count + 1) modulo Y; cdrx-count is used for indicating the first count value; Y is used for indicating the cycle of the first count value; drx-StartOffset is used for indicating a subframe in which a CDRX cycle starts; SFN is used for indicating the system frame number; subframe number is used for indicating a subframe number; and drx-cycle is used for indicating the CDRX cycle.

8. The adjustment method according to any one of claims 1 to 7, wherein the indication information is carried in radio resource control information RRC, and/or the indication information is carried in media access control information MAC CE, and/or the indication information is carried in first downlink control information DCI.

9. The adjustment method according to claim 1, wherein the indication information comprises second DCI, and at least one bit in the second DCI is used for indicating a first time offset between a moment at which the second DCI is received and the start moment of the on duration timer.

10. The adjustment method according to claim 9, wherein the second DCI is user equipment UE group common DCI.

11. The adjustment method according to claim 1, wherein the indication information comprises third DCI, at least one bit in the third DCI is used for indicating a second time offset, and the second time offset is used for adjusting the start moment of the on duration timer.

12. The adjustment method according to claim 11, wherein the third DCI is UE group common DCI.

13. An adjustment method for connected discontinuous reception, comprising:

sending indication information to user equipment UE, wherein the indication information is used for determining a start moment of an on duration timer in connected discontinuous reception CDRX; and
adjusting the start moment of the on duration timer based on the indication information.

14. The adjustment method according to claim 13, wherein the indication information comprises a first configuration

**EP 4 572 426 A1**

parameter and a second configuration parameter, the first configuration parameter is used for indicating a first subframe offset, and the second configuration parameter is used for indicating a cycle of the first subframe offset; and the adjusting the start moment of the on duration timer based on the indication information comprises:
determining a second subframe offset based on the first configuration parameter and the second configuration parameter, wherein the second subframe offset is used for determining the start moment of the on duration timer.

15. The adjustment method according to claim 14, wherein the determining a second subframe offset based on the first configuration parameter and the second configuration parameter comprises:
determining the second subframe offset based on the first configuration parameter and the second configuration parameter when a system frame returns to zero.

16. The adjustment method according to claim 14 or 15, wherein the start moment of the on duration timer meets the following first formula:

[[(SFN × 10) + subframe number] modulo (drx-cycle)] = [(drx- StartOffset)modulo(drx-cycle)], wherein
drx-StartOffset = drx-StartOffset + drx-StartOffset2 * x; initial x = 0, and when a system frame number returns to zero, x = x modulo X + 1; drx-StartOffset is used for indicating a subframe in which a CDRX cycle starts; drx-StartOffset2 is used for indicating the first subframe offset; X is used for indicating the cycle of the first subframe offset; drx-StartOffset2 * x is used for indicating the second subframe offset; SFN is used for indicating the system frame number; subframe number is used for indicating a subframe number; and drx-cycle is used for indicating the CDRX cycle.

17. The adjustment method according to claim 13, wherein the start moment of the on duration timer is a moment obtained based on a first count value.

18. The adjustment method according to claim 17, wherein the indication information comprises a third configuration parameter, and the third configuration parameter is used for indicating a cycle of the first count value.

19. The adjustment method according to claim 18, wherein the start moment of the on duration timer meets the following second formula:

$$\lfloor \text{cdrx-count modulo (drx-cycle)} \rfloor = \lfloor (\text{drx-StartOffset})\text{modulo(drx-cycle)} \rfloor,$$

wherein
initial cdrx-count = 0, and when a system frame number changes, cdrx-count = (cdrx-count + 1) modulo Y; cdrx-count is used for indicating the first count value; Y is used for indicating the cycle of the first count value; drx-StartOffset is used for indicating a subframe in which a CDRX cycle starts; SFN is used for indicating the system frame number; subframe number is used for indicating a subframe number; and drx-cycle is used for indicating the CDRX cycle.

20. The adjustment method according to any one of claims 13 to 19, wherein the indication information is carried in radio resource control information RRC, and/or the indication information is carried in media access control information MAC CE, and/or the indication information is carried in first downlink control information DCI.

21. The adjustment method according to claim 13, wherein the indication information comprises second DCI, and at least one bit in the second DCI is used for indicating a first time offset between a moment at which the second DCI is sent and the start moment of the on duration timer.

22. The adjustment method according to claim 21, wherein the second DCI is UE group common DCI.

23. The adjustment method according to claim 13, wherein the indication information comprises third DCI, at least one bit in the third DCI is used for indicating a second time offset, and the second time offset is used for adjusting the start moment of the on duration timer.

24. The adjustment method according to claim 23, wherein the third DCI is UE group common DCI.

25. An adjustment apparatus for connected discontinuous reception, comprising:

a receiving unit and a processing unit, wherein
the receiving unit is configured to receive indication information sent by a network device, wherein the indication information is used for determining a start moment of an on duration timer in connected discontinuous reception CDRX; and
the processing unit is configured to adjust the start moment of the on duration timer based on the indication information.

26. An adjustment apparatus for connected discontinuous reception, comprising:

a sending unit and a processing unit, wherein
the sending unit is configured to send indication information to user equipment UE, wherein the indication information is used for determining a start moment of an on duration timer in connected discontinuous reception CDRX; and
the processing unit is configured to adjust the start moment of the on duration timer based on the indication information.

27. User equipment, comprising a memory, a processor, and a computer program stored in the memory and capable of running on the processor, wherein when the processor executes the computer program, the adjustment method according to any one of claims 1 to 12 is implemented.

28. A network device, comprising a memory, a processor, and a computer program stored in the memory and capable of running on the processor, wherein when the processor executes the computer program, the adjustment method according to any one of claims 13 to 24 is implemented.

29. A computer-readable storage medium, wherein the computer-readable storage medium stores a computer program; and when the computer program is executed by a processor, the adjustment method according to any one of claims 1 to 12 or any one of claims 13 to 24 is implemented.

30. A computer program product, wherein the computer program product comprises computer program code, and when the computer program code is run by an electronic device, the electronic device is enabled to perform the adjustment method according to any one of claims 1 to 12 or any one of claims 13 to 24.

| On duration timer | Dormant mode | On duration timer | Inactivity timer | Dormant mode |
|---|---|---|---|---|

DRX cycle 1 — DRX cycle 2

FIG. 1

Communication
network

100

Terminal
device

102

103

104

Server

FIG. 2

FIG. 3

| Network device | | User equipment |
|---|---|---|

S201: Indication information →

S202: Adjust a start moment of an on duration timer based on the indication information

FIG. 4

FIG. 5

FIG. 6

FIG. 7

FIG. 8

| 1019 | 1020 | 1021 | 1022 | 1023 | 0 | 1 | 2 |

Network device

Application
function entity

S301: SFN

S302: Record the SFN

S303: Adjust a time interval between
two adjacent XR service data frames
after the SFN returns to zero

FIG. 9

FIG. 10

EP 4 572 426 A1

| User equipment | | Application function entity |
|---|---|---|

S401: Monitor a CDRX cycle before an SFN returns to zero

S402: Adjustment offset for a time interval between two adjacent XR service data frames

S403: Adjust the XR service data frame based on the adjustment offset after the SFN returns to zero

FIG. 11

Adjustment apparatus 500

Receiving module 510

Processing module 520

FIG. 12

Adjustment apparatus 600

Sending module 610

Processing module 620

FIG. 13

700

701

Processor

Instruction

703

702

Memory

Program

704

Communication unit

705

FIG. 14

## INTERNATIONAL SEARCH REPORT

| International application No. |
| --- |
| **PCT/CN2023/114092** |

### A. CLASSIFICATION OF SUBJECT MATTER

H04W 52/02(2009.01)i

According to International Patent Classification (IPC) or to both national classification and IPC

### B. FIELDS SEARCHED

Minimum documentation searched (classification system followed by classification symbols)

IPC: H04W, H04Q, H04L

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, OETXT, VEN, WPABS, USTXT, WOTXT: 连接态, 非连接接收, 定时器, 开启历时定时器, 开启期间定时器, 开始期间定时器, 开始, 起点, 起始, 周期, 偏移, CDRX, duration, initial, number, ODT, ON, SFN, subframe, timer, XR, start+, C-DRX, drx-cycle, period, offset

### C. DOCUMENTS CONSIDERED TO BE RELEVANT

| Category* | Citation of document, with indication, where appropriate, of the relevant passages | Relevant to claim No. |
| --- | --- | --- |
| X | CN 110036671 A (QUALCOMM INC.) 19 July 2019 (2019-07-19) description, paragraphs [0011], [0012], and [0062]-[0116], claims 19 and 29, and figures 7-12 | 1-30 |
| X | WO 2021052413 A1 (VIVO MOBILE COMMUNICATION CO., LTD.) 25 March 2021 (2021-03-25) description, page 5, line 8-page 14, line 16, and figures 1-10 | 1-30 |
| A | CN 112887066 A (CHINA MOBILE COMMUNICATION CO., LTD., RESEARCH INSTITUTE et al.) 01 June 2021 (2021-06-01) entire document | 1-30 |
| A | US 2022248331 A1 (AT & T INTELLECTUAL PROPERTY I, L.P.) 04 August 2022 (2022-08-04) entire document | 1-30 |
| A | WO 2020220361 A1 (GUANGDONG OPPO MOBILE TELECOMMUNICATIONS CORP., LTD.) 05 November 2020 (2020-11-05) entire document | 1-30 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 October 2023** | **14 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/114092** |

| C. | DOCUMENTS CONSIDERED TO BE RELEVANT | |
| --- | --- | --- |
| Category* | Citation of document, with indication, where appropriate, of the relevant passages | Relevant to claim No. |
| A | QUALCOMM INC. "3GPP TSG RAN WG1 #105-e, R1- 2104703" *Initial Evaluation Results for XR Capacity and UE Power Consumption,* 27 May 2021 (2021-05-27), entire document | 1-30 |

Form PCT/ISA/210 (second sheet) (July 2022)

## INTERNATIONAL SEARCH REPORT
### Information on patent family members

International application No.

**PCT/CN2023/114092**

| Patent document cited in search report | | | Publication date (day/month/year) | Patent family member(s) | | | Publication date (day/month/year) |
|---|---|---|---|---|---|---|---|
| CN | 110036671 | A | 19 July 2019 | US | 2018167881 | A1 | 14 June 2018 |
| | | | | TW | 201822583 | A | 16 June 2018 |
| | | | | WO | 2018111401 | A1 | 21 June 2018 |
| | | | | EP | 3552438 | A1 | 16 October 2019 |
| | | | | IN | 201927015526 | A | 30 August 2019 |
| WO | 2021052413 | A1 | 25 March 2021 | CN | 112533232 | A | 19 March 2021 |
| CN | 112887066 | A | 01 June 2021 | None | | | |
| US | 2022248331 | A1 | 04 August 2022 | US | 2023156603 | A1 | 18 May 2023 |
| WO | 2020220361 | A1 | 05 November 2020 | CN | 112970293 | A | 15 June 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211201791